Europäisches Patentamt

European Patent Office

Office européen des brevets

(19)

(11) Veröffentlichungsnummer: **0 111 733**
**B1**

(12) **EUROPÄISCHE PATENTSCHRIFT**

(45) Veröffentlichungstag der Patentschrift:
09.03.88

(21) Anmeldenummer: 83111248.7

(22) Anmeldetag: **11.11.83**

(51) Int. Cl.⁴: **G 01 N 27/12**

(54) **Flüssigkeitsempfindliches Element.**

(30) Priorität: **15.12.82 DE 3246412**

(43) Veröffentlichungstag der Anmeldung:
**27.06.84 Patentblatt 84/26**

(45) Bekanntmachung des Hinweises auf die Patenterteilung:
**09.03.88 Patentblatt 88/10**

(84) Benannte Vertragsstaaten:
**AT BE CH FR GB IT LI NL SE**

(56) Entgegenhaltungen:
**EP - A - 0 043 001**
**EP - A - 0 090 048**
**DE - A - 3 045 617**
**DE - A - 3 245 117**
**DE - B - 2 938 434**
**DE - C - 2 627 441**

(73) Patentinhaber: **PREH, Elektrofeinmechanische Werke Jakob Preh Nachf. GmbH & Co.,
Postfach 1740 Schweinfurter Strasse 5, D-8740 Bad Neustadt/Saale (DE)**

(72) Erfinder: **Ambros, Peter, Dipl.-Chem., Am Wacholderrain 12, D-8741 Hohenroth/Leutershausen (DE)**
Erfinder: **Berthold, Gottfried, Dr. rer.nat., Herzog-Ulrich-Strasse 16, D-7410 Reutlingen 28 (DE)**
Erfinder: **Budig, Walter, Buchenweg 1, D-8714 Wülfershausen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung geht von einem flüssigkeitsempfindlichen Element nach dem Oberbegriff des Anspruches 1 aus.

In zunehmendem Masse wird in der Industrie – bedingt nicht zuletzt durch den verstärkten Einsatz der Mikroelektronik und der Roboter in Fertigungsstrassen – Mess- und Regeltechnik eingesetzt. Ein wichtiger Bestandteil in der Messdatenerfassung ist der Messwertaufnehmer oder Sensor. Man steht hierbei vor dem Problem, verschiedene phsyikalische Daten erfassen zu müssen, wie z.B. Position, Temperatur, Druck, Zug, Durchfluss, Geschwindigkeit, pH-Werte, Feuchtigkeit, Flüssigkeit usw. Um die Feuchtigkeit oder den Wasserdampfgehalt von Gasen oder Flüssigkeiten messtechnisch zu erfassen, kann man verschiedene physikalische Effekte ausnutzen, z.B. die Abhängigkeit des elektrischen Widerstandes oder der Kapazität von der Feuchte.

Aus der DE-B-29 38 434 ist bereits ein kapazitiver Feuchtigkeitsfühler bekannt, bei dem auf einem feuchtigkeitsunempfindlichen Trägermaterial aus Metall, Glas oder Keramik durch einen Aufdampfprozess zwei elektrisch gegeneinander isolierte Elektroden aufgebracht sind. Diese aus Au, Ag, Pt oder Al hergestellten Elektroden sind zur Erzielung einer ausreichenden kapazitiven Wirkung kammförmig aufgefächert und greifen ineinander. Durch Hochfrequenz-Kathodenzerstäubung wird in einem nächsten Verfahrensschritt ein feuchtigkeitsempfindliches Kondensatordielektrikum darübergelagert, das sowohl «sputterbar» ist als auch eine ausreichende reversible Affinität gegenüber Feuchtigkeit aufweist. Neben Aluminiumoxid und Siliziumoxid werden noch Siliziumnitrid, Tantaloxid oder Zinksulfid verwendet. Um einen brauchbaren Messeffekt zu erzielen, muss diese gesputterte Schicht einem Aufrauhprozess unterworfen werden. Der Aufrauhprozess wird mittels Stickstoff- oder Argon-Ionen vorgegebener Energie in einer Ionenimplantationsanlage durchgeführt. Hierbei wird der Grad der Porösität der Schicht über die Strahlungsdosis eingestellt.

Ein Fühler zur Feststellung von kondensierter Feuchtigkeit ist in der DE-C-26 27 441 beschrieben. Er wird zur Steuerung einer elektrischen Heizvorrichtung verwendet, die dann eingeschaltet wird, wenn sich auf einer Glasplatte Eis, Rauhreif oder niedergeschlagene Feuchtigkeit befindet. Bei dem beschriebenen Fühler auf der Antibeschlagplatte tritt zwischen den Elektroden eine Änderung des Stromes oder der Impedanz auf, die zur Steuerung der Heizvorrichtung ausgenutzt werden. Als Trägermaterial wird eine Glasplatte, eine Aluminiumoxidplatte oder eine hitzebeständige Kunststoffplatte verwendet, auf der die Elektroden aus einem leitfähigen Material mit einer grossen chemischen Beständigkeit z.B. in einem Siebdruckverfahren aufgebracht sind. Man verwendet hierzu ein leitfähiges Metalloxid, wie z.B. $RuO_2$, $In_2O_3$, $SnO_2$, $V_2O_5$ oder ein leitfähiges, nicht leicht wanderndes Metall, wie z.B. Au, Pd, Pt oder Al, die mit einer Glasfritte vermischt werden. Zwischen den Elektroden wird eine Schicht aus Zink-Orthophosphat aufgebracht. Gelangt Feuchtigkeit darauf, so löst sich das Orthophosphat in der kondensierten Feuchtigkeit auf und dissoziiert. Wenn die Feuchtigkeit wieder verschwindet, so werden die Ionen wieder zu Zink-Orthophosphat vereinigt. Die mit dem Fühler ausgerüstete Oberfläche der Antibeschlagglasplatte wird, sobald der Widerstand des Fühlers bei niedergeschlagener Feuchtigkeit 0,5 MΩ erreicht, beheizt durch aufgedruckte Heizelementstreifen. Hierbei verschwindet der Beschlag und der Widerstand des Fühlers erreicht wieder 1 MΩ. Sobald dieser Wert erreicht ist, wird der Strom abgeschaltet.

Aus dem De-GM 81 21 939 ist ein Regenfühler für einen Regensammler bekannt, bei dem auf einer Kunststoffplatte auf der Oberseite kammartige Elektroden aufgebracht sind. Für die Beheizung sind vier Drahtwiderstände vorgesehen, die sich auf der Unterseite der Kunststoffplatte befinden. Das Gehäuse, in das die Kunststoffplatte eingesetzt ist, wird unter einer Neigung von 20 Grad eingebaut, so dass überflüssiges Regenwasser abfliessen kann. Durch die Beheizung wird die Funktion ausreichend gewährleistet, insbesondere in der kalten Jahreszeit und bei Schneefall. Ausserdem sorgt sie für das Trockenwerden des Fühlers nach der Beendigung des Niederschlages.

Die EP-A-0 043 001 beschreibt einen Feuchtigkeitsfühler mit Tantaloxyd als feuchtigkeitssensible Isolierschicht zwischen den Elektroden. Aufgabe der vorliegenden Erfindung ist es, ein flüssigkeitsempfindliches Element mit einer kurzen Ansprechzeit und einer langen Lebensdauer zu schaffen, das einen einfachen Aufbau aufweist, kostengünstig herstellbar, gegen Verschmutzung besser geschützt und bezüglich der Heizung energiesparend ist.

Diese Aufgabe wird erfindungsgemäss durch die im Patentanspruch 1 angegebenen Merkmale gelöst.

Weitere vorteilhafte Ausgestaltungen der Erfindung sind den abhängigen Patentansprüchen zu entnehmen.

Dadurch, dass sich die Widerstandsheizschicht auf der gleichen Seite befindet, wie die Elektroden, braucht nur die relativ dünne Isolierschicht durch die Heizung erwärmt zu werden, nicht jedoch auch die dagegen relativ dicke Isolierstoffplatte. Damit ist dieses Element energiesparender bei gleicher Wirkung und es weist ausserdem noch eine kürzere Ansprechzeit auf.

Einzelheiten der Erfindung werden nachfolgend für ein Beispiel anhand der Zeichnungen näher erläutert.

Von den Figuren zeigt

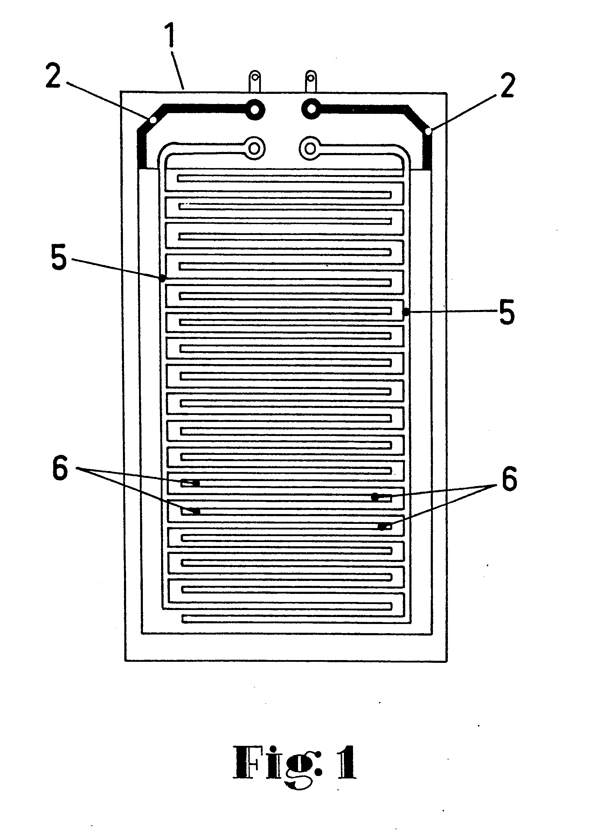

Figur 1 eine Draufsicht auf ein flüssigkeitsempfindliches Element,

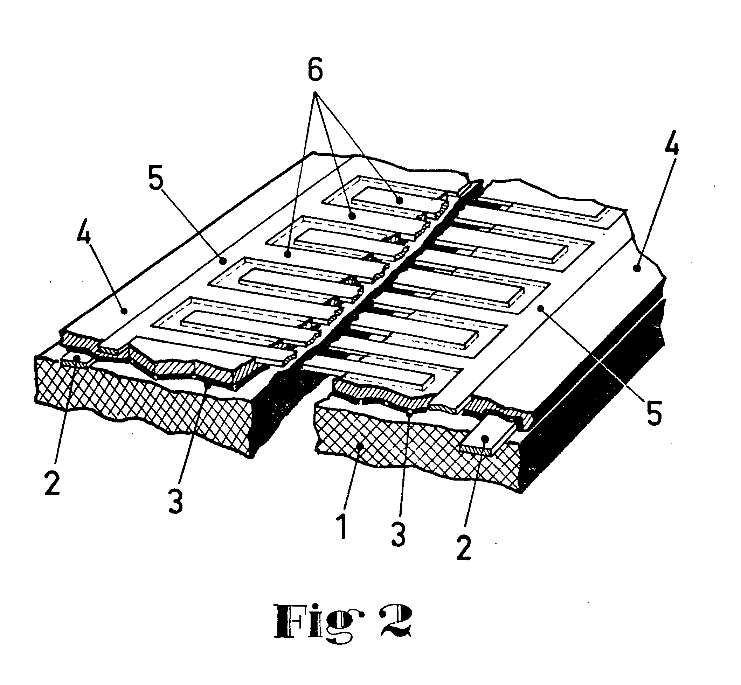

Figur 2 eine perspektivische Ansicht des Elementes, teilweise im Schnitt.

Das flüssigkeitsempfindliche Element besteht aus einer rechteckförmigen, flächigen Isolierstoffplatte 1, vorzugsweise aus Hartpapier, auf die zunächst die Anschlussleiterbahnen 2 für die Widerstandsheizschicht 3 z.B. in Siebdrucktechnik aufgebracht sind. Als Material für die Anschlussleiterbahnen 2 wird eine Widerstandspaste, z.B. eine für eine chemische Verkupferung kernkatalysierte Pyropolymerwiderstandspaste, verwendet. Der Widerstandswert der Paste ist von untergeordneter Bedeutung, da die Anschlussleiterbahnen in einem chemischen Bad ohnehin durch eine chemische Metallablagerung verstärkt werden, wobei das Metall niederohmig elektrisch leitend ist.

Bei der verkupferbaren Pyropolymerwiderstandspaste handelt es sich um eine Paste, die aus einem Bindemittel besteht, dem die leitfähigen Partikel und die Katalysatorsubstanz beigemengt sind. Als Bindemittel können Mischungen aus caprolaktam-blockiertem Polyurethan mit Silikonharzen und/oder Acetalharzen und/oder Vinylchlorid-Vinylacetatpolymerisaten und/oder gesättigte Polyester Verwendung finden. Ferner können die Bindemittel ein caprolaktam-blockiertes Addukt des Isoporondiisocyanates und eines hydroxylgruppenhaltigen Oxyesters sein.

Der Widerstandswert richtet sich nach der Art und der Packungsdichte der Pyropolymere. Dies sind elektrisch leitfähige Teilchen, die mit pyrolytischem Kohlenstoff umhüllt sind. Die Teilchen bestehen aus Aluminiumphosphat, Aluminiumoxid, Siliziumdioxid, Titandioxid, Eisenkarbid, Zinnoxid oder Bleioxid. Als leitfähige Teilchen können auch Russ, Graphit oder Abmischungen dem Bindemittel beigemengt sein.

Ausserdem sind im Bindemittel noch Katalysatoren vorhanden, die für die chemische Metallabscheidung der Anschlussleiterbahnen wirksam werden. Unter dem Ausdruck «katalytisch» soll ein Stoff oder ein Material verstanden werden, das die Metallabscheidung aus chemisch arbeitenden Bädern bewirkt. Derartige für die chemische Metallabscheidung wirksame Füllstoffe bilden an der Oberfläche und im Porensystem des Bindemittels katalytisch wirksame Zentren, an denen sich eine gut haftende Metallschicht aus einem chemisch arbeitenden Metallisierungsbad aufbauen lässt. Als Katalysatoren werden Metalle oder Metallverbindungen der Kupfer- und/oder der Platingruppe eingesetzt. Die Katalysatoren können getrennt von dem mit pyrolytischem Kohlenstoff umhüllten feuerfesten Teilchen dem Bindemittel beigemengt werden. Andererseits können diese mit Kohlenstoff umhüllten Teilchen auch mit den Katalysatoren bekeimt werden. Hierbei kann man beispielsweise so vorgehen, dass das Füllstoffmaterial als Schüttgut in eine Lösung getaucht wird, die Metalle der Kupfergruppe oder der Platingruppe enthält. Hierbei werden an den Füllstoffteilchen Keime von Metall bzw. Metallverbindungen abgeschieden. Anstelle der Metalle der genannten Gruppen können auch andere Metalle zur Bekeimung des Füllstoffes dienen. Die Auswahl dieser Metalle wird jeweils in Abhängigkeit von der später zu verwendenden Metallabscheidungslösung getroffen. Die Metallverbindungen des Kupfers, wie Kupfer-I-Oxid, sind jedoch ganz besonders als Katalysatoren für die Kupfermetallisierung geeignet. Vorzugsweise wird eine Bekeimung der Füllstoffmaterialien durchgeführt, in dem die Füllstoffteilchen mit einer Kupfer-I-Chlorid-Lösung getränkt werden und das an der Füllstoffteilchenoberfläche absorbierte Kupfer-I-Chlorid durch z.B. NaOH-Einwirkung in das praktisch in Wasser unlösliche Kupfer-I-Oxid umgewandelt wird.

Nachdem die Anschlussleiterbahnen 2 im chemischen Bad mit Kupfer beschichtet worden sind, wird im nächsten Schritt die Widerstandsheizschicht 3 im Siebdruckverfahren aufgebracht. Diese Schicht besteht ebenfalls aus einer Pyropolymerwiderstandspaste, die im Widerstandswert meist etwas hochohmiger ist als die der Anschlussleiterbahnen 2. Ausserdem fehlen in dieser Paste die für die chemische Abscheidung wichtigen Katalysatoren.

Über der Widerstandsheizschicht 3 befindet sich eine Isolierschicht 4, in der die Elektroden 5, 6 eingebettet sind. Diese Elektroden bestehen aus zwei Längselektroden 5, die sich am Rand parallel zu den beiden Längsseiten der Isolierstoffplatte 1 erstrecken, und kammförmigen Zinken 6, die abwechselnd von den beiden Längselektroden 5 nach innen verlaufen, ohne sich jedoch zu berühren. Gelangt nun eine elektrisch leitende Flüssigkeit zwischen die Zinken, so wird der zuvor sehr hochohmige Widerstand erniedrigt und diese Erniedrigung kann z.B. zur Anzeige von Regen ausgenutzt werden.

Es ist leicht ersichtlich, dass die relativ dünne Isolierschicht 4, die sich zwischen der Widerstandsheizschicht 3 und den Elektroden 5, 6 befindet, leichter aufheizbar ist, als die im Vergleich dazu relativ dicke Isolierstoffplatte 1. Das Element erhält dadurch eine kürzere Ansprechzeit. Ausserdem ist dies energiesparender, da weniger Energie benötigt wird, um den gleichen Effekt, nämlich Trocknung der glatten Oberfläche des Elementes, zu erzielen.

Das Aufbringen der Isolierschicht 4 zusammen mit den Elektroden 5, 6 erfolgt mit Hilfe der sogenannten Umkehrlaminiertechnik. Bei dieser Technik geht man zunächst von einem Zwischenträger aus, auf dem die Elektroden im gewünschten Layout, vorzugsweise durch Aufdrucken im Siebdruckverfahren, aufgebracht sind. Danach wird das Gebilde ausgehärtet und mit der beschichteten Seite auf die Isolierstoffplatte 1, die bereits mit der Widerstandsheizschicht versehen ist, auflaminiert, unter Verwendung eines Epoxyharzklebers als Isolierschicht. In einem abschliessenden Verfahrensschritt wird der Zwischenträger abgezogen bzw. vollständig abgeätzt. Die Anschlussstellen an den Leiterbahnen bzw. Elektroden für Nieten oder Crampen werden zuvor mittels einer Abdeckung abgedeckt.

Das Material für die Elektroden 5, 6 besteht aus einer niederohmigen, russhaltigen Paste. Diese Paste zeigt keine Wanderungserscheinungen bei hoher Feuchtigkeit oder in Anwesenheit von Flüssigkeit. Es kann auch eine niederohmige Paste aus pyrolytisch mit Kohlenstoff beschichteten temperaturbeständigen Teilchen verwendet werden.

Günstig auf eine kürzere Ansprechzeit wirkt es sich auch aus, dass die Widerstandsheizschicht 3 die Fläche, auf der die Zinken 6 angeordnet sind, ganz überdeckt.

Bedingt durch die Umkehrlaminiertechnik bzw. die dadurch erzielte Einbettung der Elektroden in die Isolierschicht wird eine glatte Oberfläche erreicht, so dass die Flüssigkeit bei Schrägstellung leicht abfliessen kann.

Das Element kann nicht nur als Regensensor eingesetzt werden, sondern überall da, wo es darauf ankommt, das Vorhandensein von leitenden Flüssigkeiten anzuzeigen.

Bezugszeichenliste
1 Isolierstoffplatte
2 Anschlussleiterbahnen
3 Widerstandsheizschicht
4 Isolierschicht
5 Längselektroden
6 Zinken

## Patentansprüche

1. Flüssigkeitsempfindliches Element, bestehend aus einer beschichteten, flächenhaften und im Vergleich zu dieser Beschichtung dicken Isolierstoffplatte (1) mit einer Ober- und einer Unterseite, bei der auf der Oberseite zwei kammförmige Elektroden (5, 6) mit je einer parallel zu den Seitenrändern der Isolierstoffplatte (1) verlaufenden Längselektrode (5) und einer Vielzahl von senkrecht hierzu stehenden Zinken (6) derart aufgebracht sind, dass die Zinken (6) abwechselnd von den beiden Seitenrändern her ineinander verschachtelt, benachbarte Zinken (6) jedoch elektrisch voneinander getrennt sind, und wobei auf der Isolierstoffplatte (1) zusätzlich zu den Elektroden (5, 6) noch eine grossflächige Widerstandsheizschicht (3) mit ihren Anschlussleiterbahnen (2) aufgebracht ist, dadurch gekennzeichnet, dass sich die Widerstandsheizschicht (3) im Bereich zwischen der Elektrodenanordnung (5, 6) und der Isolierstoffplatte (1) flächig estreckt und dass die Widerstandsheizschicht (3) und die Elektroden (5, 6) insgesamt nur durch eine im Vergleich zur Isolierstoffplatte (1) dünne Isolierschich (4) voneinander getrennt sind, in die die Elektroden (5, 6) eingebettet sind.

2. Flüssigkeitsempfindliches Element nach Anspruch 1, dadurch gekennzeichnet, dass die zuerst auf die Isolierstoffplatte (1) aufgebrachte Widerstandsheizschicht (3) aus einer Pyropolymerwiderstandspaste hergestellt ist.

3. Flüssigkeitsempfindliches Element nach einem der Ansprüche 1 bis 2, dadurch gekennzeichnet, dass die Anschlussleiterbahnen (2) für die Widerstandsheizschicht (3) aus einer Pyropolymerwiderstandspaste hergestellt sind und dieser Paste für die chemische Metallabscheidung wirksame Katalysatoren beigemengt sind.

4. Flüssigkeitsempfindliches Element nach einem der Ansprüche 1 bis 3, dadurch gekennzeichnet, dass die Elektroden (5, 6) in einer Umkehrlaminiertechnik hergestellt sind, so dass die Elektroden in der Isolierschicht (4) derart eingebettet sind, dass eine glatte Oberfläche entsteht.

5. Flüssigkeitsempfindliches Element nach Anspruch 4, dadurch gekennzeichnet, dass die Elektroden (5, 6) aus einer niederohmigen, russhaltigen Paste hergestellt sind.

## Claims

1. Fluid sensitive element, consisting of a coated, laminar and, in comparison with this coating, thick insulating material plate (1) with an upper side and an underside, in which applied to the upper side are two comblike electrodes (5, 6) each with a longitudinal electrode (5) running parallel to the side margins of the insulating material plate (1) and a plurality of prongs (6) at right angles to it, such that the prongs (6) extending alternately from the two side margins interlock, but adjacent prongs (6) are electrically separate from one another, and in which there is also applied to the insulating material plate (1), in addition to the electrodes (5, 6), a large-area resistance heating layer (3) with its connection strip conductors (2), characterised in that the resistance heating layer (3) extends in a laminar manner in the area between the electrode arrangement (5, 6) and the insulating material plate (1), and that the resistance heating layer (3) is separated from all the electrodes (5, 6) only by an insulating layer (4), which is thin in comparison with the insulating material plate (1), and into which the electrodes (5, 6) are embedded.

2. Fluid sensitive element according to claim 1, characterised in that the resistance heating layer (3) applied first to the insulating material plate (1) is manufactured from a pyropolymer resistor paste.

3. Fluid sensitive element according to one of claims 1 to 2, characterised in that the connection strip conductors (2) for the resistance heating layer (3) are manufactured from a pyropolymer resistor paste and catalysts, which are active for the chemical deposit of metal, are added to this paste.

4. Fluid sensitive element according to one of claims 1 to 3, characterised in that the electrodes (5, 6) are produced in an inverted laminating technique, with the result that the electrodes are embedded in the insulating layer (4) such that a smooth surface is obtained.

5. Fluid sensitive element according to claim 4, characterised in that the electrodes (5, 6) are manufactured from a low-impedance, soot-containing paste.

## Revendications

1. Elément sensible à la présence de liquide, composé d'une plaque (1) plate de matériau isolant, revêtue d'une couche et relativement épaisse par rapport à cette couche, la plaque comportant une face supérieure et une face inférieure, et ayant à sa partie supérieure deux électrodes (5, 6) en forme de peigne comportant chacune une électrode (5) longitudinale s'étendant parallèlement aux bords latéraux de la plaque (1) isolante, et un grand nombre de dents (6) disposées perpendiculairement aux électrodes longitudinales, de sorte que les dents (6) venant des deux bords latéraux s'imbriquent les unes entre les autres, que les dents (6) voisines soient cependant séparées électriquement, et une couche 3 de chauffage par résistance de grande surface, comportant ses pistes conductrices (2) de branchement étant en outre appliquée sur la plaque (1) de matériau isolant, en plus des électrodes (5, 6), élément caractérisé en ce que la couche (3) de chauffage par résistance s'étend en surface dans la zone située entre le dispositif d'électrodes (5, 6) et la plaque (1) de matériau isolant, et en ce que les électrodes (5, 6) et la couche (3) de chauffage par résistance ne sont en tout et pour tout séparées l'une de l'autre que par une couche isolante (4) dans laquelle les électrodes (5, 6) sont enrobées et qui est mince en comparaison de la plaque (1) de matériau isolant.

2. Elément sensible à la présence de liquide selon la revendication 1, caractérisé en ce que la couche (3) de chauffage par résistance, qui est appliquée la première sur la plaque (1) de matériau isolant, est réalisée à partir d'une pâte résistante en pyropolymère.

3. Elément sensible à la présence de liquide selon une des revendications 1 ou 2, caractérisée en ce que les pistes conductrices (2) de branchement de la couche (3) de chauffage par résistance sont fabriquées à partir d'une pâte résistante en pyropolymère et en ce que des catalyseurs actifs pour le dépôt chimique de métaux sont mélangés à cette pâte.

4. Elément sensible à la présence de liquide selon l'une des revendications 1 à 3, caractérisé en ce que les électrodes (5, 6) sont fabriquées selon une technique de stratification inversée, de sorte que les électrodes sont enrobées dans la couche isolante (4) de manière qu'il en résulte une surface extérieure lisse.

5. Elément sensible à la présence de liquide selon la revendication 4, caractérisé en ce que les électrodes (5, 6) sont fabriquées à partir d'une pâte à faible résistance ohmique et qui contient du noir de carbone.

# Fig. 1

7

Fig 2